# EUROPÄISCHE PATENTANMELDUNG

(11) **EP 4 769 632 A1**
(43) Veröffentlichungstag der Anmeldung: **01.07.2026**
(21) Anmeldenummer: 24223541.4
(22) Anmeldetag: 27.12.2024
(51) Int. Cl.: H01M 10/42, H01M 10/48, H01M 50/103

(54) **PRISMATISCHE BATTERIEZELLE MIT TEMPERATURSENSOREINHEIT**

(71) Anmelder: Cellforce Group GmbH, 72138 Kirchentellinsfurt (DE)
(72) Erfinder: Staacke, Carsten, 72138 Kirchentellinsfurt (DE); Roch, Philipp, 72138 Kirchentellinsfurt (DE)
(74) Vertreter: Michalski Hüttermann & Partner mbB

(57) **Zusammenfassung**

Die vorliegende Erfindung betrifft eine prismatische Batteriezelle, umfassend ein Gehäuse enthaltend einen Elektrolyten, zumindest zwei in dem Gehäuse angeordnete Elektrodenstacks und zumindest eine Temperatursensoreinheit, wobei jeder Elektrodenstack abwechselnd gestapelte Anodenschichten und Kathodenschichten mit jeweils dazwischen angeordneten Separatorschichten umfasst, wobei die Anodenschichten mit einem ersten Stromsammler und die Kathodenschichten mit einem zweiten Stromsammler elektrisch verbunden sind, wobei der erste und zweite Stromsammler jeweils durch eine Gehäusewand des Gehäuses hindurchgeführt ist von außerhalb des Gehäuses elektrisch kontaktierbar ist, und wobei die Temperatursensoreinheit eine zwischen den zwei Elektrodenstacks angeordnete Sensorschicht und einen durch eine Gehäusewand des Gehäuses hindurchgeführten Leiteranschluss umfasst, wobei die Sensorschicht Leiterbahnen und zumindest einen Temperatursensor aufweist.

## Beschreibung

Die vorliegende Erfindung betrifft eine prismatische Batteriezelle mit Temperatursensoreinheit.

Prismatische Batteriezellen sind an sich bekannt und werden insbesondere in Anwendungen mit hohen Anforderungen an die Energiedichte und mechanische Stabilität eingesetzt. Die Temperatur einer prismatischen Batteriezelle bei deren Betrieb zu kennen ist wichtig, da die Temperatur einen entscheidenden Einfluss auf die Leistung, Sicherheit und Lebensdauer der Batteriezelle hat. Beispielsweise in Anwendungen mit hohen Leistungsanforderungen, wie in der Elektromobilität oder stationären Energiespeichersystemen, ist die genaue Überwachung der Zelltemperatur unerlässlich, um den zuverlässigen Betrieb sicherzustellen und gleichzeitig die maximale Leistung und Lebensdauer zu erreichen. Eine gleichmäßige Temperaturverteilung innerhalb der Batteriezelle ist zum Beispiel wichtig, um thermische Hotspots zu vermeiden, die die Zellchemie negativ beeinflussen können. Lokale Überhitzung kann zu beschleunigtem Verschleiß, Kapazitätsverlust oder im schlimmsten Fall zu thermischem Durchgehen führen, was die Betriebssicherheit der Zelle gefährdet.

In bekannter Weise werden Temperatursensoren entweder außerhalb der Zellstruktur positioniert und die Zellinnentemperatur über Simulationen abgebildet oder außerhalb der Elektrodenstacks und innerhalb des Batteriezellengehäuses von oben durch die Zelldecke eingeführt, wodurch ebenfalls Daten mit nur einer geringen Verlässlichkeit erhalten werden können und gegebenenfalls die elektrochemischen und thermischen Eigenschaften der Zelle gestört werden oder die Messergebnisse unzureichend genau sind.

Es ist daher die Aufgabe der vorliegenden Erfindung, eine prismatische Batteriezelle bereitzustellen, die eine präzise Temperaturmessung ermöglicht, ohne die elektrochemischen, mechanischen oder thermischen Eigenschaften der Zelle wesentlich zu beeinflussen.

Gelöst wird diese Aufgabe durch die unabhängigen Ansprüche. Bevorzugte Ausgestaltungen der Erfindung sind in den Unteransprüchen, in der Beschreibung oder den Figuren angegeben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Mit der Erfindung wird eine prismatische Batteriezelle vorgeschlagen, umfassend ein Gehäuse enthaltend einen Elektrolyten, zumindest zwei in dem Gehäuse angeordnete Elektrodenstacks und zumindest eine Temperatursensoreinheit,
wobei jeder Elektrodenstack abwechselnd gestapelte Anodenschichten und Kathodenschichten mit jeweils dazwischen angeordneten Separatorschichten umfasst, wobei die Anodenschichten mit einem ersten Stromsammler und die Kathodenschichten mit einem zweiten Stromsammler elektrisch verbunden sind, wobei der erste und zweite Stromsammler jeweils durch eine Gehäusewand des Gehäuses hindurchgeführt ist von außerhalb des Gehäuses elektrisch kontaktierbar ist,
und wobei die Temperatursensoreinheit eine zwischen den zwei Elektrodenstacks angeordnete Sensorschicht und einen durch eine Gehäusewand des Gehäuses hindurchgeführten Leiteranschluss umfasst, wobei die Sensorschicht Leiterbahnen und zumindest einen Temperatursensor aufweist.

Dadurch kann insbesondere erreicht werden, dass die Temperatur einer prismatische Batteriezelle besonders genau gemessen werden kann. Insbesondere wird durch die vorliegende Erfindung ermöglicht, dass die Temperatur einer prismatischen Zelle ortsaufgelöst besonders genau gemessen werden kann, wobei die Zellstruktur thermisch, mechanisch und elektrochemisch durch die spezifische Anordnung der Sensorschicht zwischen den Elektrodenstacks besonders wenig gestört wird.

Unter dem Begriff prismatische Batterie wird im Sinne der vorliegenden Erfindung insbesondere eine Sekundärbatterie, also eine wiederaufladbare Batterie verstanden, die sich durch eine im Wesentlichen prismatische Grundform auszeichnet. Die im Wesentlichen prismatische Grundform ergibt sich insbesondere durch die Grundform der aufeinandergestapelten Schichten der Batterie. Die aufeinandergestapelten Schichten bedingen zwei gegenüberliegende im Wesentlichen parallelen Basisflächen, die zusammen mit entsprechenden Mantelflächen die prismatische Grundform ergeben.

Unter einem Gehäuse ist im Sinne der vorliegenden Erfindung insbesondere eine äußere Umhüllung zu verstehen, die dazu dient die internen Komponenten der Batterie räumlich zu umschließen und von der Umgebung zu trennen. Gehäuse von prismatischen Batterien bestehen typischerweise aus Metallen, wie Aluminium oder Stahl, und/oder gegebenenfalls Kunststoffen, wie Polypropylen, Polycarbonat oder Polyamid.

Unter einem Elektrodenstack wird im Sinne der vorliegenden Erfindung insbesondere einen Anordnung der abwechselnd gestapelten Anodenschichten und Kathodenschichten, verstanden, die durch Separatorschichten voneinander getrennt sind. Unter Schichten, wie Anodenschicht, Kathodenschicht oder Separatorschicht, kann im Sinne der vorliegenden Erfindung verstanden werden, dass die entsprechenden Gegenstände im Wesentlichen zweidimensional ausgebildet sind, also eine im Verhältnis zur Breite und Länge des Gegenstands deutlich geringere Dicke aufweisen. Dabei wird unter dem Stapeln von Schichten im Sinne der vorliegenden Erfindung insbesondere verstanden, dass die Schichten entlang ihrer Dicke aufeinander angeordnet sind.

Die Anodenschicht im Sinne der vorliegenden Erfindung kann insbesondere für die Aufnahme von Lithium-Ionen während des Ladevorgangs der prismatischen Batteriezelle vorgesehen sein. Die Kathodenschicht im Sinne der vorliegenden Erfindung kann insbesondere für die Aufnahme von Elektronen während des Entladevorgangs der prismatischen Batteriezelle vorgesehen sein. Die Separatorschicht ist Sinne der vorliegenden Erfindung jeweils zwischen einer Anodenschicht und einer Kathodenschicht angeordnet und ermöglicht insbesondre den Durchfluss von Ionen, wie Lithiumionen, und verhindert gleichzeitig den direkten Kontakt zwischen Anode und Kathode.

Unter einem Elektrolyten ist im Sinne der vorliegenden Erfindung insbesondere eine ionenleitfähige Substanz, insbesondere Flüssigkeit, zu verstehen, die zwischen Anodenschichten und Kathodenschichten angeordnet ist und den Transport von Ionen zwischen den Anodenschichten und den Kathodenschichten ermöglicht.

Innerhalb eines Elektrodenstacks sind die Anodenschichten demnach von den Kathodenschichten jeweils durch eine Separatorschicht getrennt, wobei kein Kontakt zwischen den Anodenschichten und Kathodenschichten besteht und eine Ionenleitfähigkeit durch die Separatorschicht hindurch mittels des Elektrolyten ermöglicht wird.

Zwischen zwei Elektrodenstacks ist im Sinne der vorliegenden Erfindung eine Sensorschicht der Temperatursensoreinheit angeordnet. Die äußeren Schichten der Elektrodenstacks sind deshalb insbesondere durch die Sensorschicht voneinander getrennt und sind insbesondere auch nicht direkt miteinander kontaktiert. Demnach sind die Elektrodenstacks elektrochemisch voneinander getrennt, so dass zwischen ihnen keine chemische Reaktion stattfindet.

In vorteilhafter Weise kann dadurch erreicht werden, dass eine elektrochemische Beeinflussung durch die Temperatursensoreinheit verringert wird. Durch die Anordnung der Sensorschicht zwischen zwei Elektrodenstacks kann zudem die mechanische Belastung der Sensorschicht bei Ladevorgängen der Batterie möglichst gleichmäßig gering sein, da ein Breathing oder Swelling der Batterie die Sensorschicht von beiden Seiten im Wesentlichen gleichmäßig belastet. Dadurch kann gegebenenfalls eine erhöhte Lebensdauer der Sensorschicht ermöglicht werden. Ferner kann durch die Anordnung der Sensorschicht ermöglicht werden, dass eine thermische Beeinflussung der Batterie möglichst gleichmäßig ist. Insbesondere im Vergleich zu einer einseitigen Anordnung von entsprechenden Sensoren kann durch die Anordnung zwischen zwei Elektrodenstacks erreicht werden, dass jegliche thermische Beeinflussung der Zelltemperatur durch die Temperatursensoren gleichmäßig von innerhalb der Batteriezelle geschieht.

Bevorzugt kann vorgesehen sein, dass die Schichten eine rechteckige Grundform aufweisen. Dadurch kann in vorteilhafter Weise erreicht werden, dass die Batteriezelle im Wesentlichen die Form eines rechteckigen Prismas oder Quaders aufweist, wodurch sie besonders raumeffizient genutzt werden kann.

Bevorzugt kann vorgesehen sein, dass das Gehäuse zwei im Wesentlichen rechteckige zueinander parallele Basisflächen aufweist und vier die Basisflächen verbindende Mantelflächen. In anderen Worten kann bevorzugt vorgesehen sein, dass das Gehäuse im Wesentlichen die Form eines rechteckigen Prismas aufweist. Entsprechend kann vorgesehen sein, dass jeweils zwei Mantelflächen an sich gegenüberliegenden Seiten des Gehäuses parallel zueinander angeordnet sind. Bevorzugt kann vorgesehen sein, dass das rechteckige Prisma eine Höhe aufweist, die kleiner ist als die Länge und Breite der zwei Basisflächen.

Bevorzugt kann vorgesehen sein, dass die prismatische Batteriezelle genau zwei Elektrodenstacks aufweist.

Bevorzugt kann vorgesehen sein, dass die Sensorschicht eine Dicke in einem Bereich von ≥ 50 µm bis ≤ 300 µm aufweist, bevorzugt ≥ 100 µm bis ≤ 200 µm. Dadurch kann in vorteilhafter Weise erreicht werden, dass die Sensorschicht so dünn ist, dass sie die mechanischen und elektrochemischen Eigenschaften der Zelle nur minimal beeinflusst, gleichzeitig jedoch ausreichend robust bleibt, um mechanischen Spannungen innerhalb der Zelle standzuhalten.

Bevorzugt kann vorgesehen sein, dass die Sensorschicht ein flexibles PCB (Printed Circuit Board) ist. Dadurch kann in vorteilhafter Weise erreicht werden, dass die Sensorschicht mechanisch flexibel ist und sich dynamischen Veränderungen, wie Swelling oder mechanischen Belastungen, innerhalb der Zelle anpasst, ohne ihre Funktionalität oder die Integrität der Zelle zu beeinträchtigen.

Bevorzugt kann vorgesehen sein, dass die Sensorschicht ein vierlagiges PCB ist, wobei besonders bevorzugt vorgesehen sein kann, dass die Leiterbahnen und Temperatursensoren an der Außenseite des PCB angeordnet sind. Dadurch kann in vorteilhafter Weise erreicht werden, dass die Anordnung der elektrischen Komponenten leichter zugänglich ist und die Integration in die prismatische Batteriezelle erleichtert wird. Ferner kann dadurch erreicht werden, dass die Temperaturmessungen noch präziser sind.

Bevorzugt kann vorgesehen sein, die Sensorschicht eine erste und eine zweite Substratschicht aufweist, wobei zwischen den Substratschichten zumindest teilweise eine Leiterschicht angeordnet ist umfassend die Leiterbahnen und den zumindest einen Temperatursensor. Dadurch kann in vorteilhafter Weise erreicht werden, dass die Leiterschicht sicher zwischen den Substratschichten eingebettet ist, was mechanischen Schutz bieten kann und gleichzeitig eine präzise Positionierung der Leiterbahnen und Temperatursensoren innerhalb der Sensorschicht ermöglichen kann.

Bevorzugt kann vorgesehen sein, dass die Leiterbahnen so angeordnet sind, dass sie den zumindest einen Temperatursensor kontaktieren und mit dem Leiteranschluss verbinden. Dadurch kann in vorteilhafter Weise erreicht werden, dass eine zuverlässige elektrische Verbindung zwischen dem Temperatursensor und dem Leiteranschluss hergestellt werden kann, wodurch eine störungsfreie Signalübertragung gewährleistet wird.

Bevorzugt kann vorgesehen sein, dass die Substratschichten Polyimid und/oder Polyester aufweisen, insbesondere daraus bestehen, wobei bevorzugt zumindest eine, insbesondere beide Substratschichten aus Polyimid bestehen. Dadurch kann in vorteilhafter Weise erreicht werden, dass die Sensorschicht eine hohe thermische Stabilität und chemische Beständigkeit gegenüber dem Elektrolyten aufweist, während gleichzeitig die mechanische Flexibilität erhalten bleibt.

Bevorzugt kann vorgesehen sein, dass der Temperatursensor ein Platin-Widerstandsthermometer ist. Ein Platin-Widerstandsthermometer ist ein Sensor zur Temperaturmessung, der die Abhängigkeit des elektrischen Widerstand von der Temperatur nutzt. Platin wird als Material verwendet, da es eine nahezu lineare Beziehung zwischen Temperatur und Widerstand aufweist, eine hohe Stabilität besitzt und eine hervorragende chemische Beständigkeit zeigt. Der Sensor besteht typischerweise aus einem dünnen Draht oder einer dünnen Schicht Platin, die entweder auf ein Substrat aufgebracht oder in einer schützenden Hülle eingebettet ist. Der Widerstand des Platins wird gemessen, und über eine Kalibrierung wird die entsprechende Temperatur bestimmt. Bevorzugt kann vorgesehen sein, dass das Platin Widerstandsthermometer einen Widerstandswert bei 0°C von 100 Ohm (PT100) aufweist. Dadurch kann in vorteilhafter Weise erreicht werden, dass die Temperaturmessung mit hoher Präzision und Stabilität über einen breiten Temperaturbereich erfolgt, wobei die Langzeitzuverlässigkeit des Sensors selbst unter anspruchsvollen Bedingungen gewährleistet ist.

Bevorzugt kann vorgesehen sein, dass die Sensorschicht mehr als einen Temperatursensor aufweist, insbesondere eine Anzahl von größer oder gleich 2 bis kleiner oder gleich 1024 Temperatursensoren, bevorzugt größer oder gleich 4 bis kleiner oder gleich 512, mehr bevorzugt größer oder gleich 8 bis kleiner oder gleich 256, beispielsweise 16, 32, 64 oder 128. Dadurch kann vorteilhafterweise erreicht werden, dass die Temperatur der Batteriezelle an vielen Stellen besonders genau gemessen werden kann.

Bevorzugt kann vorgesehen sein, dass die Temperatursensoren in einer Matrix angeordnet sind. Darunter ist zu verstehen, dass die Sensoren gleichmäßig in einem festgelegten Raster positioniert sind. Dadurch kann in vorteilhafter Weise erreicht werden, dass eine klare Struktur für die Positionierung der Sensoren geschaffen wird. Somit kann in vorteilhafter Weise einerseits die Temperatur der Batterie besonders gleichmäßig verteilt gemessen werden und andererseits die Temperatur zwischen verschiedenen Messpunkten besonders gut interpoliert werden.

Bevorzugt kann vorgesehen sein, dass die die Sensorschicht ≥ 0,1 Temperatursensoren pro cm² bis ≤ 1 Temperatursensor pro cm² aufweist, bezogen auf die Fläche der Sensorschicht, bevorzugt ≥ 0,2 Temperatursensoren pro cm² bis ≤ 0,5 Temperatursensoren pro cm². Dadurch kann in vorteilhafter Weise erreicht werden, dass die Temperaturmessung mit einer hohen räumlichen Auflösung durchgeführt wird.

Bevorzugt kann vorgesehen sein, dass der Leiteranschluss durch einen abgedichteten Spalt in der Gehäusewand des Gehäuses hindurchgeführt ist, wobei bevorzugt der Spalt mit einem Dichtmaterial verschlossen ist. Dadurch kann in vorteilhafter Weise erreicht werden, dass die Dichtigkeit der prismatischen Batteriezelle erhalten bleibt und ein Austreten des Elektrolyten verhindert wird.

In einer bevorzugten Ausgestaltung kann vorgesehen sein, dass das Gehäuse ein im Wesentlichen rechteckiges Prisma ist und der Leiteranschluss durch eine Mantelfläche des Gehäuses hindurchgeführt ist. Dadurch kann der Leiteranschluss besonders einfach aus den Elektrodenstacks herausgeführt werden und eine Auswerteeinheit besonders einfach angeschlossen werden.

Bevorzugt kann vorgesehen sein, dass die Elektrodenstacks in ihrer Reihenfolge und Anzahl der Anordnung der Schichten identisch oder entlang der Sensorschicht gespiegelt aufgebaut sind. Dadurch kann in vorteilhafter Weise erreicht werden, die Sensorschicht mittig in der Batteriezelle angeordnet ist.

In einer bevorzugten Ausgestaltung kann vorgesehen sein, dass das Gehäuse ein im Wesentlichen rechteckiges Prisma ist und der erste und zweite Stromsammler jeweils durch eine Mantelfläche des Gehäuses hindurchgeführt sind. In einer besonders bevorzugten Ausgestaltung kann vorgesehen sein, dass der erste und zweite Stromsammler jeweils durch die gleiche Mantelfläche des Gehäuses oder durch sich gegenüberliegende zueinander parallele Mantelflächen hindurchgeführt sind. Dadurch können die Stromsammler besonders einfach mit den Anodenschichten bzw. Kathodenschichten elektrisch verbunden werden und die Batteriezelle von Außen besonders einfach kontaktiert werden.

In einer besonders bevorzugten Ausgestaltung kann vorgesehen sein, dass der erste und zweite Stromsammler jeweils durch eine andere Mantelfläche als der Leiteranschluss hindurchgeführt sind, wobei insbesondere der erste und zweite Stromsammler jeweils durch die gleich Mantelfläche des Gehäuses oder durch sich gegenüberliegende zueinander parallele Mantelflächen hindurchgeführt sind und der Leiteranschluss durch eine dazu senkrecht stehende Mantelfläche hindurchgeführt ist. Dadurch kann insbesondere erreicht werden, dass die Leiteranschlüsse besonders einfach kontaktiert werden können.

In einer ersten bevorzugten alternativen Ausgestaltung kann vorgesehen sein, dass die zumindest zwei Elektrodenstacks einen gemeinsamen Stromsammler für die Anodenschichten und einen gemeinsamen Stromsammler für die Kathodenschichten verwenden. Dadurch kann in vorteilhafter Weise erreicht werden, dass die elektrische Leitungsführung vereinfacht wird und die Zellstruktur kompakter gestaltet werden kann.

In einer zweiten bevorzugten alternativen Ausgestaltung kann vorgesehen sein, dass die zumindest zwei Elektrodenstacks jeweils einen Stromsammler für die Anodenschichten und Kathodenschichten aufweisen. Dadurch kann in vorteilhafter Weise erreicht werden, dass die Elektrodenstacks individuell angesteuert werden können.

Bevorzugt kann vorgesehen sein, dass jeder Elektrodenstack ≥ 10 bis ≤ 500 Anodenschichten oder Kathodenschichten aufweist, bevorzugt ≥ 20 bis ≤ 250, mehr bevorzugt ≥ 50 bis ≤ 100. Dadurch kann in vorteilhafter Weise erreicht werden, dass die prismatische Batteriezelle eine hohe Energiedichte aufweist und die Temperatur zugleich mit besonders guter Genauigkeit gemessen werden kann.

Bevorzugt kann vorgesehen sein, dass die Anodenschichten und Kathodenschichten in den Elektrodenstacks abwechselnd und in gleichmäßiger Dicke gestapelt sind, wobei die Dicke der einzelnen Schichten im Bereich von 10 bis 200 µm liegt. Dadurch kann in vorteilhafter Weise erreicht werden, dass eine gleichmäßige Stromverteilung und ein optimiertes elektrochemisches Verhalten erzielt werden.

Bevorzugt kann vorgesehen sein, dass die äußeren Schichten der Elektrodenstacks jeweils durch Separatorschichten oder die Sensorschicht von benachbarten Komponenten der Batteriezelle isoliert sind. Dadurch kann in vorteilhafter Weise erreicht werden, dass die Elektrodenstacks elektrisch und mechanisch geschützt sind.

Mit der Erfindung wird ferner eine Temperatursensoreinheit für eine erfindungsgemäße prismatische Batteriezelle vorgeschlagen, umfassend eine zwischen zwei Elektrodenstacks anordenbare Sensorschicht und einen durch eine Gehäusewand des Gehäuses hindurchführbaren Leiteranschluss, wobei die Sensorschicht Leiterbahnen und zumindest einen Temperatursensor aufweist.

Durch die Temperatursensoreinheit kann in vorteilhafter Weise erreicht werden, dass die Temperatur innerhalb der prismatischen Batteriezelle präzise und ortsaufgelöst gemessen werden kann, wobei die mechanische, thermische und elektrochemische Integrität der Zelle durch die spezielle Anordenbarkeit und Ausgestaltung der Sensorschicht nicht wesentlich beeinträchtigt wird. Der durch die Gehäusewand hindurchführbare Leiteranschluss ermöglicht eine sichere und störungsfreie Signalübertragung von den Temperatursensoren nach außen. Die Leiterbahnen und Temperatursensoren innerhalb der Sensorschicht sind optimal geschützt und mechanisch stabil integriert, wodurch eine zuverlässige Langzeitfunktionalität bei Verwendung in der Batteriezelle möglich sein kann.

Ferner wird mit der Erfindung die Verwendung einer erfindungsgemäßen Temperatursensoreinheit zur Temperaturmessung in einer erfindungsgemäßen prismatische Batteriezelle vorgeschlagen.

Durch die Verwendung der erfindungsgemäßen Temperatursensoreinheit zur Temperaturmessung in einer prismatischen Batteriezelle kann in vorteilhafter Weise erreicht werden, dass thermische Hotspots oder Temperaturgradienten innerhalb der Zelle präzise erfasst werden können, was eine bessere Kontrolle der thermischen Bedingungen ermöglichen kann. Dies trägt zur Optimierung des Batteriebetriebs, einer längeren Lebensdauer und einer erhöhten Betriebssicherheit bei.

Mit der Erfindung wird zudem ein elektrisches System umfassend eine erfindungsgemäße prismatische Batteriezelle und einen an die prismatische Batteriezelle elektrisch angeschlossenen elektrischen Verbraucher vorgeschlagen.

Dadurch kann in vorteilhafter Weise erreicht werden, dass die prismatische Batteriezelle effizient in verschiedenste Anwendungen integriert werden kann, wobei der elektrische Verbraucher zuverlässig mit Energie versorgt wird. Die Kombination mit der prismatischen Batteriezelle ermöglicht eine hohe Energiedichte und eine präzise Überwachung der Zellbedingungen.

Bevorzugt kann vorgesehen sein, dass das elektrisches System eine mit dem Leiteranschluss der Temperatursensoreinheit verbundene Auswerteeinheit umfasst.

Dadurch kann in vorteilhafter Weise erreicht werden, dass die Temperaturdaten der prismatischen Batteriezelle kontinuierlich erfasst und ausgewertet werden können, um eine genaue Überwachung der Betriebsbedingungen zu gewährleisten. Dies unterstützt eine optimierte Steuerung des elektrischen Systems und erhöht dessen Effizienz und Betriebssicherheit.

Weitere Vorteile und vorteilhafte Ausgestaltungen des erfindungsgemäßen Verfahrens sind durch die Figuren veranschaulicht und in der nachfolgenden Beschreibung erläutert. Dabei ist zu beachten, dass die Figuren nur beschreibenden Charakter haben und nicht dazu gedacht sind, die Erfindung in irgendeiner Form einzuschränken.

Es zeigen
Fig. 1 zeigt schematisch einen Elektrodenstack in einem Querschnitt, wie er in einer erfindungsgemäßen prismatische Batteriezelle verwendet werden kann.
Fig. 2 zeigt schematisch eine erfindungsgemäße prismatische Batteriezelle gemäß einer bevorzugten Ausgestaltung in einem Querschnitt durch die Elektrodenstacks, und

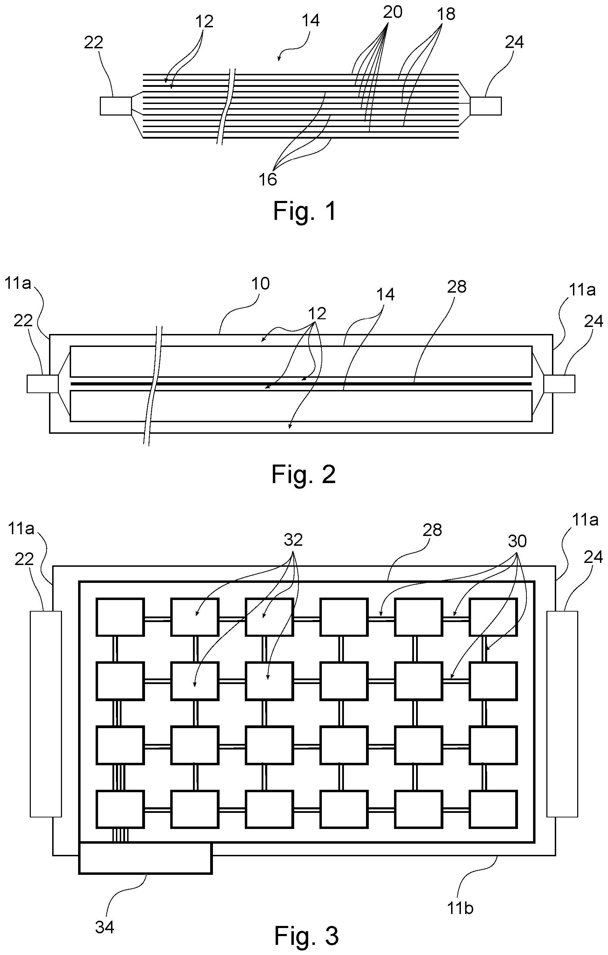

Fig. 2 schematisch eine Aufsicht auf einen Querschnitt der erfindungsgemäßen prismatischen Batteriezelle gemäß der bevorzugten Ausgestaltung aus Fig. 1 parallel zur Sensorschicht.

Fig. 1 zeigt schematisch einen Elektrodenstack 14 in einem Querschnitt, wie er in der erfindungsgemäßen prismatischen Batteriezelle 1 verwendet werden kann. Der Elektrodenstack 14 umfasst einer Anordnung abwechselnd gestapelter Anodenschichten 16 und Kathodenschichten 18, die jeweils durch Separatorschichten 20 voneinander getrennt sind. Jede Anodenschicht 16 ist mit einem ersten Stromsammler 22 elektrisch verbunden, während jede Kathodenschicht 18 mit einem zweiten Stromsammler 24 elektrisch verbunden ist. Der Elektrolyt 12 ermöglicht den Ionenfluss durch die Separatorschichten 20 zwischen den Anodenschichten 16 und Kathodenschichten 18.

Fig. 2 zeigt schematisch eine erfindungsgemäße prismatische Batteriezelle 1 gemäß einer bevorzugten Ausgestaltung in einem Querschnitt durch die Elektrodenstacks 14. Zu erkennen sind das Gehäuse 10 mit den Mantelflächen, von denen zwei gegenüberliegende Mantelflächen 11a dargestellt sind, durch die der erste Stromsammler 22 und der zweite Stromsammler 24 hindurchgeführt sind. Innerhalb des Gehäuses 10 sind zwei Elektrodenstacks 14 angeordnet, die beispielsweise wie in Fig. 1 dargestellt ausgestaltet sind. Zwischen den Elektrodenstacks 14 befindet sich die Sensorschicht 28. Der Elektrolyt 12 umgibt die Schichten.

Fig. 3 zeigt schematisch eine Aufsicht auf einen Querschnitt der erfindungsgemäßen prismatischen Batteriezelle 1 gemäß der bevorzugten Ausgestaltung aus Fig. 1 parallel zur Sensorschicht 28. In der Sensorschicht 28 sind die Temperatursensoren 32 angeordnet und die Leiterbahnen 30, die nur vereinfacht schematisch gezeigt sind, verbinden die Temperatursensoren 32 mit dem Leiteranschluss 34. Der erste Stromsammler 22 und der zweite Stromsammler 24 sind wieder erkennbar und durch die gegenüberliegenden Mantelflächen 11a geführt. Der durch eine senkrecht zu den zwei gegenüberliegenden Mantelflächen 11a stehende Mantelfläche 11b des Gehäuses 10 hindurchgeführt ist.

### Bezugszeichen:

- 1:: prismatische Batteriezelle
- 10:: Gehäuse
- 11a:: gegenüberliegende Mantelflächen
- 11b:: senkrecht stehende Mantelfläche
- 12:: Elektrolyt
- 14:: Elektrodenstack
- 16:: Anodenschicht
- 18:: Kathodenschicht
- 20:: Separatorschicht
- 22:: Stromsammler (erster)
- 24:: Stromsammler (zweiter)
- 26:: Temperatursensoreinheit
- 28:: Sensorschicht
- 30:: Leiterbahnen
- 32:: Temperatursensor
- 34:: Leiteranschluss
- 36:: Auswerteeinheit
- 38:: Verbraucher

## Patentansprüche

1. Prismatische Batteriezelle (1), umfassend ein Gehäuse (10) enthaltend einen Elektrolyten (12), zumindest zwei in dem Gehäuse (10) angeordnete Elektrodenstacks (14) und zumindest eine Temperatursensoreinheit (26),
wobei jeder Elektrodenstack (14) abwechselnd gestapelte Anodenschichten (16) und Kathodenschichten (18) mit jeweils dazwischen angeordneten Separatorschichten (20) umfasst, wobei die Anodenschichten (16) mit einem ersten Stromsammler (22) und die Kathodenschichten (18) mit einem zweiten Stromsammler (24) elektrisch verbunden sind, wobei der erste und zweite Stromsammler (22, 24) jeweils durch eine Gehäusewand des Gehäuses (10) hindurchgeführt ist und von außerhalb des Gehäuses (10) elektrisch kontaktierbar ist,
und wobei die Temperatursensoreinheit (26) eine zwischen den zwei Elektrodenstacks (14) angeordnete Sensorschicht (28) und einen durch eine Gehäusewand des Gehäuses (10) hindurchgeführten Leiteranschluss (34) umfasst, wobei die Sensorschicht (28) Leiterbahnen (30) und zumindest einen Temperatursensor (32) aufweist.

2. Prismatische Batteriezelle (1) nach dem vorherigen Anspruch, wobei die Sensorschicht (28) eine Dicke in einem Bereich von ≥ 50 µm bis ≤ 300 µm aufweist, bevorzugt ≥ 100 µm bis ≤ 200 µm.

3. Prismatische Batteriezelle (1) nach einem der vorherigen Ansprüche, wobei die Sensorschicht (28) eine Dicke in einem Bereich von ≥ 50 µm bis ≤ 300 µm aufweist, bevorzugt ≥ 100 µm bis ≤ 200 µm

4. Prismatische Batteriezelle (1) nach einem der vorherigen Ansprüche, wobei die Sensorschicht (28) eine erste und eine zweite Substratschicht aufweist, wobei zwischen den Substratschichten zumindest teilweise eine Leiterschicht angeordnet ist umfassend die Leiterbahnen (30) und den zumindest einen Temperatursensor (32).

5. Prismatische Batteriezelle (1) nach dem vorherigen Anspruch, wobei die Substratschichten Polyimid und/oder Polyester aufweisen, insbesondere daraus bestehen, wobei bevorzugt zumindest eine, insbesondere beide Substratschichten aus Polyimid bestehen.

6. Prismatische Batteriezelle (1) nach einem der vorherigen Ansprüche, wobei der Temperatursensor (32) ein Platin-Widerstandsthermometer ist.

7. Prismatische Batteriezelle (1) nach einem der vorherigen Ansprüche, wobei die Sensorschicht (28) mehr als einen Temperatursensor (32) aufweist, insbesondere eine Anzahl von größer oder gleich 2 bis kleiner oder gleich 1024 Temperatursensoren (32), bevorzugt größer oder gleich 4 bis kleiner oder gleich 512, mehr bevorzugt größer oder gleich 8 bis kleiner oder gleich 256, beispielsweise 16, 32, 64 oder 128.

8. Prismatische Batteriezelle (1) nach einem der vorherigen Ansprüche, wobei der Leiteranschluss (34) durch einen abgedichteten Spalt in der Gehäusewand des Gehäuses (10) hindurchgeführt ist, wobei bevorzugt der Spalt mit einem Dichtmaterial verschlossen ist.

9. Prismatische Batteriezelle (1) nach einem der vorherigen Ansprüche, wobei das Gehäuse (10) ein im Wesentlichen rechteckiges Prisma ist und der Leiteranschluss (34) durch eine Mantelfläche des Gehäuses (10) hindurchgeführt ist.

10. Prismatische Batteriezelle (1) nach dem vorherigen Anspruch, wobei der erste und zweite Stromsammler (22, 24) jeweils durch eine andere Mantelfläche als der Leiteranschluss (34) hindurchgeführt sind, wobei insbesondere der erste und zweite Stromsammler (22, 24) jeweils durch die gleiche Mantelfläche des Gehäuses (10) oder durch sich gegenüberliegende zueinander parallele Mantelflächen (11a) hindurchgeführt sind und der Leiteranschluss (34) durch eine dazu senkrecht stehende Mantelfläche (11b) hindurchgeführt ist.

11. Prismatische Batteriezelle (1) nach einem der vorherigen Ansprüche, wobei jeder Elektrodenstack (14) ≥ 10 bis ≤ 500 Anodenschichten (16) oder Kathodenschichten (18) aufweist, bevorzugt ≥ 20 bis ≤ 250, mehr bevorzugt ≥ 50 bis ≤ 100.

12. Temperatursensoreinheit (26) für eine prismatische Batteriezelle (1) nach einem der vorherigen Ansprüche, umfassend eine zwischen zwei Elektrodenstacks (14) anordenbare Sensorschicht (28) und einen durch eine Gehäusewand des Gehäuses (10) hindurchführbaren Leiteranschluss (34), wobei die Sensorschicht (28) Leiterbahnen (30) und zumindest einen Temperatursensor (32) aufweist.

13. Verwendung einer Temperatursensoreinheit (26) nach Anspruch 12 zur Temperaturmessung in einer prismatische Batteriezelle.

14. Elektrisches System umfassend eine prismatische Batteriezelle (1) nach einem der vorherigen Ansprüche und einen an die prismatische Batteriezelle (1) elektrisch angeschlossenen elektrischen Verbraucher (38).

15. Elektrisches System nach Anspruch 14, umfassend eine mit dem Leiteranschluss (34) der Temperatursensoreinheit (26) verbundene Auswerteeinheit (36).
